# EUROPÄISCHE PATENTSCHRIFT

(11) **EP 2 067 420 B1**
(45) Veröffentlichungstag und Bekanntmachung des Hinweises auf die Patenterteilung: **29.06.2011**
(21) Anmeldenummer: 08168767.5
(22) Anmeldetag: 10.11.2008
(51) Int. Cl.: A47J 31/08

(54) **Aus einem Filterpapier hergestellter, tütenartiger Filtereinsatz**
Bag-like filter insert made from filter paper
Utilisation de filtre fabriqué à partir d'un papier filtre, de type sac

(30) Priorität: 03.12.2007 DE 202007016661 U
(43) Veröffentlichungstag der Anmeldung: 10.06.2009
(73) Patentinhaber: Melitta Haushaltsprodukte GmbH & Co. KG, 32427 Minden (DE)
(72) Erfinder: Hassebrauck, Michael, 32469 Petershagen (DE)
(74) Vertreter: Dantz, Jan Henning

(56) Entgegenhaltungen:
- EP-A- 1 236 426
- DE-A1- 19 516 800
- DE-U1- 9 415 447

## Beschreibung

Die vorliegende Erfindung betrifft einen aus einem Filterpapier hergestellten, tütenartigen Filtereinsatz für die Herstellung von Aromaauszügen insbesondere aus Kaffee, mit einem Boden, von dem aus sich zwei gegenüberliegende Seitenwände bis zu einer oberen Einfüllöffnung erstrecken, wobei die Seitenwände randseitig miteinander verbunden sind und die Durchlässigkeit der Seitenwände im unteren Bereich geringer ist als im oberen Bereich.

Filtereinsätze der gattungsgemäßen Art sind an sich bekannt.

Die DE 195 16 800 A1 einen Filterpapiereinsatz mit einem Boden, zwei gegenüberliegenden Seitenwänden und einer oberen Einfüllöffnung. Dabei sind die Seitenwände randseitig miteinander verbunden sind. Die Seitenwände weisen dabei Schlitze auf, welche sich, bedingt durch den hydrostatischen Druck, verschieden stark öffnen. Dabei kann die Länge die Schlitze entweder durchgängig gleich gewählt werden oder zur Einfüllöffnung zunehmen, da der hydrostatische Druck in dem Filtergefäß in Richtung der Einfüllöffnung abnimmt.

Die EP 1 236 426 A1 offenbart einen Filterpapiereinsatz zur Herstellung von Aromaauszügen mit einer Perforation, welche ganz oder bereichsweise auf bzw. in die Wandung des Filterpapiereinsatzes eingebracht ist.

Bei einem bekannten Filtereinsatz der gattungsgemäßen Art ist der obere Bereich mit einer durch Nadelung oder eine Prägung erzeugte Perforationszone ausgestattet, während der untere Bereich des Filtereinsatzes unbehandelt ist. Die Perforationszone kann dabei so ausgelegt sein, dass die Durchlässigkeit zum oberen Rand des Filtereinsatzes hin ansteigt.

Damit wird insgesamt erreicht, dass bei Einsatz einer vorgegebenen Menge eines Aromaträgers und einer vorgegebenen Menge an Brühwasser ein Brühgetränk relativ hoher Trinkstärke erreicht wird, wobei gleichzeitig ein Überlaufen des Brühwassers über den oberen Rand des Filtereinsatzes hinaus ausgeschlossen ist.

Der vorliegenden Erfindung liegt die Aufgabe zugrunde, einen Filtereinsatz der gattungsgemäßen Art dahingehend weiterzuentwickeln, dass mit einem derartigen Filtereinsatz eine Verbesserung der Qualität und des Geschmacks eines Brühgetränkes, insbesondere von Kaffee, ermöglicht wird.

Diese Aufgabe wird erfindungsgemäß dadurch gelöst, dass die Seitenwände insgesamt drei Bereiche mit unterschiedlichen Durchlässigkeiten aufweisen und dass diese Bereiche parallel zum Boden verlaufende Streifen bilden, wobei streifenartigen Bereiche unterschiedlicher Durchlässigkeiten durch Perforationslöcher mit unterschiedlichen Durchmessern und/oder Anzahl von Perforationslöchern pro Flächeneinheit gebildet sind.

Durch diese konstruktive Ausgestaltung des Filtereinsatzes werden insgesamt drei Zonen verschiedener Durchlässigkeit geschaffen. Dabei ist die im Bereich des Bodens liegende Zone die am wenigsten durchlässige, die mittlere Zone weist eine demgegenüber größere Durchlässigkeit auf und die im Bereich des oberen Randes verlaufende Zone ist insgesamt mit der größten Durchlässigkeit ausgestattet, so dass die Kontaktzeiten des Brühwassers mit dem in den Filtereinsatz eingefüllten Aromaträger unterschiedlich lang sind, was positive Einflüsse hat auf die Qualität und den Geschmack des erzeugten Brühgetränkes. Ein Überlaufen des Brühwassers über den oberen Rand des Filtereinsatzes hinaus ist dabei schon wie bei den bekannten Filtereinsätzen sicher vermieden.

Dabei sollen im vorliegenden Zusammenhang unter dem Begriff "Perforationslöcher" solche Lochungen verstanden werden, die sowohl durch eine Nadelung wie auch durch eine Prägeperforation erzeugt werden können.

Weitere Merkmale der Erfindung sind Gegenstand weiterer Unteransprüche.

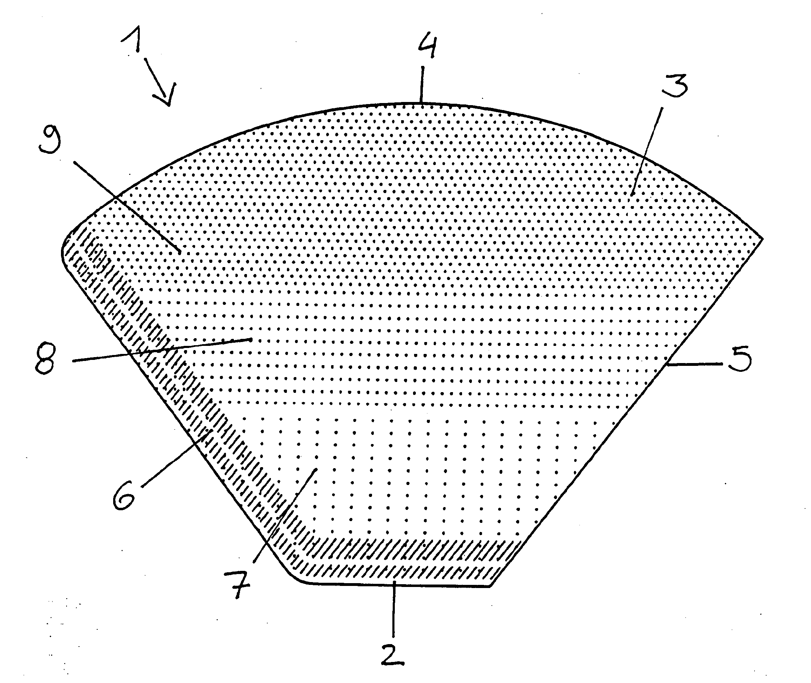

Ein Ausführungsbeispiel der Erfindung ist in der beigefügten Zeichnung dargestellt und wird im Folgenden näher beschrieben. Die einzige Figur zeigt eine Ansicht eines erfindungsgemäßen Filtereinsatzes.

In der Zeichnung ist mit dem Bezugszeichen 1 ein erfindungsgemäßer Filtereinsatz bezeichnet, der in an sich bekannter Weise aus einem Filterpapier hergestellt und für die Herstellung von Aromaauszügen insbesondere aus Kaffee vorgesehen ist.

Der Filtereinsatz 1 weist einen Boden 2 auf, von dem aus sich zwei gegenüberliegende Seitenwände 3 bis zu einer oberen Einfüllöffnung 4 erstrecken.

Die Seitenwände 3 sind randseitig miteinander verbunden, und zwar einmal durch eine Faltkante 5 und zum anderen durch eine doppelte Prägenaht 6. Alternativ hierzu kann aber auch eine einfache Prägenaht 6 vorgesehen sein.

Die Seitenwände 3 sind mit insgesamt drei Bereichen 7, 8, 9 mit unterschiedlichen Durchlässigkeiten versehen. Diese Bereiche 7 bis 9 bilden - geometrisch gesehen - etwa parallel zum Boden 2 verlaufende Streifen.

Die Breite dieser Streifen kann untereinander gleich sein, die Streifen können aber auch unterschiedliche Breiten aufweisen, wobei im gezeigten Ausführungsbeispiel der untere Streifen 7 und der obere Streifen 9 eine größere Breite aufweisen als der mittlere Streifen 8.

Die unterschiedliche Durchlässigkeit dieser Streifen 7 bis 9 wird vorteilhafterweise erreicht durch Perforierung.

Dabei kann die Perforierung sowohl durch eine Nadelung wie auch durch eine Prägeperforierung erreicht werden.

Um die unterschiedlichen Durchlässigkeiten darzustellen, können die einzelnen Löcher der perforierten Zonen 7 bis 9 unterschiedliche Durchmesser aufweisen. Dabei würden die Lochdurchmesser der unteren Zone 7 geringer sein als die Durchmesser der darüber liegenden mittleren Zone 8 und die Durchmesser der Perforationslöcher in der oberen Zone 9 weisen insgesamt dann den größeren Durchmesser auf. Es ist aber auch denkbar, durchgehend gleiche Lochdurchmesser zu verwenden und die unterschiedliche Durchlässigkeit durch die Anzahl von Perforationslöchern pro Quadratzentimeter zu variieren.

Dies ist im dargestellten Ausführungsbeispiel so ausgeführt und es wird erkennbar, dass die untere Zone 7 relativ wenige Perforationslöcher pro Quadratzentimeter aufweist, beispielsweise nur vier bis acht Perforationslöcher pro Quadratzentimeter, und dass die Anzahl der Perforationslöcher pro Quadratzentimeter in der mittleren und der oberen Zone 8 bzw. 9 deutlich zunehmen. Die mittlere Zone 8 kann beispielsweise zehn bis vierzehn Perforationslöcher pro Quadratzentimeter aufweisen und die obere Zone 9 kann etwa 16 bis 26 Perforationslöcher pro Quadratzentimeter aufweisen.

Selbstverständlich kann auch eine Kombination unterschiedlicher Lochdurchmesser und unterschiedlicher Anzahl von Perforationslöchern pro Quadratzentimeter zu dem angestrebten Erfolg führen.

Durch die unterschiedlichen Durchlässigkeiten innerhalb der einzelnen Streifen 7, 8, 9 ergeben sich unterschiedlich lange Kontaktzeiten des Brühwassers mit einem in den Filtereinsatz 1 eingefüllten Aromaträger. Dabei nehmen diese Kontaktzeiten vom Bodenbereich bis zur Einfüllöffnung 4 hin gesehen ab. Dies liegt daran, dass die Durchlässigkeit des Filtereinsatzes zur Einfüllöffnung 4 hin gesehen zunimmt. Damit kann auch erreicht werden, dass ein Überlaufen des Brühwassers über den oberen Randbereich des Filtereinsatzes hinaus verhindert wird.

Der erfindungsgemäße Filtereinsatz 1 kann optimal genutzt werden, wenn der Ablauf von heißem Brühwasser entsprechend gesteuert wird in dem Sinne, dass beispielsweise in einem ersten Zyklus nur die untere Zone 7 mit Wasser gefüllt wird und in weiteren Zyklen sukzessive eine Füllung bis in die obere Zone 9 erfolgt. Dadurch wird bei der Befüllung des Filterpapiereinsatzes mit wenig Kaffeemehl für z.B. zwei Tassen der Brühvorgang bei konstanter Fördermenge an heißem Wasser verlängert. Falls hingegen eine größere Portion Kaffee gebrüht werden soll, wird der Ablauf bei mehr Befüllung mit einer größeren Menge an Kaffeemehl erleichtert, wenn die Flüssigkeit die weiter oben gelegenen Streifen erreicht, wodurch auch ein Überlaufen verhindert wird.

## Patentansprüche

1. Aus einem Filterpapier hergestellter, tütenartiger Filtereinsatz (1) für die Herstellung von Aromaauszügen insbesondere aus Kaffee, mit einem Boden (2), von dem aus sich zwei gegenüberliegende Seitenwände (3) bis zu einer oberen Einfüllöffnung (4) erstrecken, wobei die Seitenwände (3) randseitig miteinander verbunden sind und die Durchlässigkeit der Seitenwände (3) im unteren Bereich geringer ist als im oberen Bereich, **dadurch gekennzeichnet, dass** die Seitenwände (3) insgesamt drei Bereiche (7, 8, 9) mit unterschiedlichen Durchlässigkeiten aufweisen und dass diese Bereiche (7, 8, 9) parallel zum Boden (2) verlaufende Streifen bilden, wobei die streifenartigen Bereiche (7, 8, 9) unterschiedlicher Durchlässigkeiten durch Perforationslöcher mit unterschiedlichen Durchmessern und/oder Anzahl von Perforationslöchern pro Flächeneinheit gebildet sind.

2. Filtereinsatz nach Anspruch 1, **dadurch gekennzeichnet, dass** die Breite der einzelnen Streifen (7, 8, 9) etwa gleich groß ist.

3. Filtereinsatz nach Anspruch 1, **dadurch gekennzeichnet, dass** die Breite der einzelnen Streifen (7, 8, 9) unterschiedlich groß ist.

4. Filtereinsatz nach Anspruch 1, **dadurch gekennzeichnet, dass** die Breite des mittleren Streifens (8) kleiner ist als die Breite des unteren und des oberen Streifens (7, 9).

5. Filtereinsatz nach einem der vorhergehenden Ansprüche, **dadurch gekennzeichnet, dass** im unteren Streifen (7) etwa sechs Perforationslöcher pro Quadratzentimeter vorgesehen sind.

6. Filtereinsatz nach einem der vorhergehenden Ansprüche, **dadurch gekennzeichnet, dass** im mittleren Streifen (8) etwa 12 Perforationslöcher pro Quadratzentimeter vorgesehen sind.

7. Filtereinsatz nach einem der vorhergehenden Ansprüche, **dadurch gekennzeichnet, dass** im oberen Streifen (9) etwa 21 Perforationslöcher pro Quadratzentimeter vorgesehen sind.

## Claims

1. Bag-like filter insert (1), which is made of a filter paper, for producing aromatic extracts of, in particular, coffee, with a base (2) from which two oppositely disposed side walls (3) extend up to an upper filling opening (4), wherein the side walls (3) are connected together at the edge and the permeability of the side walls (3) is less in the lower region than in the upper region, **characterised in that** the side walls (3) have in total three regions (7, 8, 9) with different permeabilities and that these regions (7, 8, 9) form strips extending parallelly to the base (2), wherein the strip-like regions (7, 8, 9) of different permeabilities are formed by perforation holes with different diameters and/or number of perforation holes per unit of area.

2. Filter insert according to claim 1, **characterised in that** the width of the individual strips (7, 8, 9) is approximately the same.

3. Filter insert according to claim 1, **characterised in that** the width of the individual strips (7, 8, 9) is different.

4. Filter insert according to claim 1, **characterised in that** the width of the middle strip (8) is smaller than the width of the lower and the upper strips (7, 9).

5. Filter insert according to any one of the preceding claims, **characterised in that** approximately six perforation holes per square centimetre are provided in the lower strip (7).

6. Filter insert according to any one of the preceding claims, **characterised in that** approximately twelve perforation holes per square centimetre are provided in the middle strip (8).

7. Filter insert according to any one of the preceding claims, **characterised in that** approximately twenty-one perforation holes per square centimetre are provided in the upper strip (9).

## Revendications

1. Garniture filtrante (1) en forme de cornet réalisée en papier filtre, destinée à la préparation d'extraits aromatisés en particulier de café comportant un fond (2) se prolongeant par deux parois latérales opposées (3) s'étendant jusqu'à une ouverture de remplissage supérieure (4), les parois latérales (3) étant reliées l'une à l'autre au niveau de leurs bords latéraux, et la perméabilité des bords latéraux (3) étant plus faible dans la zone inférieure, que dans la zone supérieure,
**caractérisée en ce que**
les parois latérales (3) présentent globalement trois zones (7, 8, 9) ayant des perméabilités différentes, et **en ce que** ces zones (7, 8, 9) définissent des bandes s'étendant parallèlement au fond (2), les zones en forme de bandes (7, 8, 9) de perméabilités différentes étant formées par des perforations ayant des diamètres différents et/ou un nombre différent de perforations par unité de surface.

2. Garniture filtrante selon la revendication 1,
**caractérisée en ce que**
les largeurs des différentes bandes (7, 8, 9) sont essentiellement similaires.

3. Garniture filtrante selon la revendication 1,
**caractérisée en ce que**
les largeurs des différentes bandes (7, 8, 9) sont différentes.

4. Garniture filtrante selon la revendication 1,
**caractérisée en ce que**
la largeur de la bande médiane (8) est inférieure à la largeur des bandes supérieure et inférieure (7, 9).

5. Garniture filtrante selon l'une quelconque des revendications précédentes,
**caractérisée en ce que**
dans la bande inférieure (7), il est prévu environ six perforations par centimètre carré.

6. Garniture filtrante selon l'une quelconque des revendications précédentes,
**caractérisée en ce que**
dans la bande médiane (8), il est prévu environ 12 perforations par centimètre carré.

7. Garniture filtrante selon l'une quelconque des revendications précédentes,
**caractérisée en ce que**
dans la bande supérieure (9), il est prévu environ 21 perforations par centimètre carré.
